# EUROPEAN PATENT APPLICATION

(11) **EP 4 793 798 A1**
(43) Date of publication of application: **19.08.2026**
(21) Application number: 24888697.0
(22) Date of filing: 05.11.2024
(51) Int. Cl.: G06F 18/2413

(54) **IMAGE CLASSIFICATION DEVICE, IMAGE CLASSIFICATION METHOD, AND IMAGE CLASSIFICATION PROGRAM**

(30) Priority: 06.11.2023 JP 2023189208; 06.11.2023 JP 2023189209; 06.11.2023 JP 2023189210
(71) Applicant: JVCKenwood Corporation, Yokohama-shi, Kanagawa 2210022 (JP)
(72) Inventor: TAKEHARA Hideki, Yokohama-shi Kanagawa 221-0022 (JP)
(74) Representative: Wagner & Geyer
(86) International application number: PCT/JP2024/039277
(87) International publication number: WO 2025/100402

(57) **Abstract**

An image feature quantity output unit (10) is pre-trained on a sentence and an image, receives an image as an input, and outputs an image feature quantity. An image prototype generation unit (20) calculates the image feature quantity for each class and outputs an image prototype of each class. A sentence feature quantity output unit (50) is pre-trained on a sentence and an image, receives a sentence describing a class as an input, and outputs a sentence feature quantity. A similarity calculation unit (30) holds, as a weight of a base class, the image prototype of the base class, holds, as a weight of an incremental class, the sentence feature quantity of the incremental class, receives the image feature quantity output from the image feature quantity output unit (10) as an input, and calculates a similarity. A classification unit (40) receives the similarity as an input and determines a class of the image.

## Description

### TECHNICAL FIELD

The present invention relates to image classification technology.

### BACKGROUND ART

Human beings can learn new knowledge through experiences over a long period of time and can maintain old knowledge without forgetting it. Meanwhile, the knowledge of a deep neural network (DNN) that uses a convolutional neutral network (CNN), etc. depends on the dataset used in learning. To adapt to a change in data distribution, it is necessary to re-learn DNN parameters in response to the entirety of the dataset. In DNN, the precision of estimation for old tasks will be decreased as new tasks are learned. Thus, catastrophic forgetting cannot be avoided in DNN. Namely, the result of learning old tasks is forgotten as new tasks are being learned in continual learning.

Incremental learning or continual learning is proposed as a scheme to avoid catastrophic forgetting. Continual learning is a learning method that improves a current trained model to learn new tasks and new data as they occur, instead of training the model from scratch.

Human beings can also learn new knowledge from a small number of images. On the other hand, artificial intelligence using deep learning that uses a convolutional neural network, etc., relies on big data (a large number of images) used for learning. It is known that, when artificial intelligence using deep learning is trained on a small number of images, it falls into overfitting characterized by good local performance but poor generalization performance.

Few-shot learning has been proposed as a method to avoid overfitting. Few-shot learning is a learning method that uses big data in a base task to learn basic knowledge and then uses the basic knowledge to learn new knowledge from a small number of images in a new task.

Few-shot class incremental learning and a technology of using an averaged feature vector as a weight vector are available as methods for solving the problems of both continual learning and few-shot learning (patent literature 1). There is also a technology of finding a match between a feature vector of a text and a feature vector of an image (non-patent literature 1).

### RELATED-ART LITERATURE

### NON-PATENT LITERATURE

### Patent literature 1: JP2023-039351

Non-patent literature: Radford, Alec, et al. "Learning transferable visual models from natural language supervision." International conference on machine learning. PMLR, 2021.

### SUMMARY OF INVENTION

In the related art, there is a problem in that the accuracy of calculation of incremental class images is not sufficiently high in incremental learning of a small number of images.

The embodiment addresses the issue described above, and a purpose thereof is to provide an image classification technology capable of improving the accuracy of classification of incremental class images in incremental learning of a small number of images.

An image classification apparatus according to an embodiment includes: an image feature quantity output unit that is pre-trained on a sentence and an image, receives an image as an input, and outputs an image feature quantity; an image prototype generation unit that calculates the image feature quantity for each class and outputs an image prototype of each class; a sentence feature quantity output unit that is pre-trained on a sentence and an image, receives a sentence describing a class as an input, and outputs a sentence feature quantity; a similarity calculation unit that holds, as a weight of a base class, the image prototype of the base class, holds, as a weight of an incremental class, the sentence feature quantity of the incremental class, receives the image feature quantity output from the image feature quantity output unit as an input, and calculates a similarity; and a classification unit that receives the similarity as an input and determines a class of the image.

Another embodiment relates to an image classification method. The method includes: being pre-trained on a sentence and an image, receiving an image as an input, and outputting an image feature quantity; calculating the image feature quantity for each class and outputting an image prototype of each class; being pre-trained on a sentence and an image, receiving a sentence describing a class as an input, and outputting a sentence feature quantity; holding, as a weight of a base class, the image prototype of the base class, holding, as a weight of an incremental class, the sentence feature quantity of the incremental class, receiving the image feature quantity output from the outputting of an image feature quantity as an input, and calculating a similarity; and receiving the similarity as an input and determining a class of the image.

Optional combinations of the aforementioned constituting elements, and implementations of the embodiments in the form of methods, apparatuses, systems, recording mediums, and computer programs may also be practiced as modes of the embodiments.

The embodiment provides an image classification technology capable of improving the accuracy of classification of incremental class images in incremental learning of a small number of images.

### BRIEF DESCRIPTION OF DRAWINGS

[Fig. 1] Fig. 1 shows a configuration of an image classification apparatus according to the exemplary embodiment.
[Fig. 2] Fig. 2 is a flowchart showing steps of incremental learning by the image classification apparatus of the exemplary embodiment.
[Fig. 3] Fig. 3 shows an example of the calculation of an incremental class prototype.
[Fig. 4] Fig. 4 shows an exemplary operation of the weight generation unit of the exemplary embodiment.
[Fig. 5] Fig. 5 is a flowchart showing steps of classification by image classification apparatus.
[Fig. 6] Fig. 6 shows the image classification apparatus 100 of variation 1.
[Fig. 7] Fig. 7 is a flowchart showing steps of incremental learning by the image classification apparatus of variation 1.
[Fig. 8] Fig. 8 shows a configuration of the image classification apparatus of variation 2.
[Fig. 9] Fig. 9 is a flowchart showing steps of incremental learning by the image classification apparatus of variation 2.
[Fig. 10] Fig. 10 shows the image classification apparatus of variation 3.
[Fig. 11] Fig. 11 is a flowchart showing steps of incremental learning by the image classification apparatus of variation 3.
[Fig. 12] Fig. 12 shows an exemplary operation of the weight generation unit of variation 3.
[Fig 13] Fig. 13 shows the image classification apparatus of variation 4.
[Fig. 14] Fig. 14 is a flowchart showing steps of incremental learning by the image classification apparatus of variation 4.
[Fig. 15] Fig. 15 shows examples of super classes.
[Fig. 16] Fig. 16 shows the calculation of an incremental class prototype by the incremental class prototype generation unit of variation 4.
[Fig. 17] Fig. 17 shows other examples of super classes.
[Fig. 18] Fig. 18 shows a configuration of the image classification apparatus of variation 5.
[Fig. 19] Fig. 19 is a flowchart showing steps of incremental learning by the image classification apparatus of variation 5.
[Fig. 20] Fig. 20 shows an exemplary operation of the weight generation unit of variation 5.
[Fig. 21] Fig. 21 shows a configuration of the image classification apparatus of variation 6.
[Fig. 22] Fig. 22 shows a configuration of the image classification apparatus 100 of variation 7.

### DESCRIPTION OF EMBODIMENTS

First, a basic training dataset and an incremental training dataset will be explained.

The basic training dataset is a supervised dataset including a large number of base classes (e.g., about 100 to 1000 classes), wherein each base class is comprised of a large number of training images (e.g., 500 to 3000 images). The basic training dataset is assumed to have a sufficient amount of data to allow learning a general classification task alone. It is assumed here that the number of base classes is 60, and the number of base class training images is 500.

On the other hand, the incremental training dataset is a supervised dataset including a small number of incremental classes (e.g., about 1 to 10 classes), wherein each incremental class is comprised of a small number of training images (e.g., about 1 to 10 images). It is assumed here that the set includes a small number of images but may include a large number of images provided that the number of classes is small. It is assumed here that the number of incremental classes is 5, and the number of incremental class training images is 5.

The class names of the base and incremental classes are expressed in texts (sentences).

In class incremental learning, the class learned first is called a base class (known class), and the class added later (unknown class) is called an incremental class. When a base class is learned, the base class is learned by using a basic dataset. When an incremental class is learned, the incremental class is added to the previously learned classes by using an incremental dataset.

In a classification (inference) stage, classification into the bases classes and classification into all incremental classes can be performed at the same time.

Two manners are available for incremental learning. One is a method that re-trains the image feature extraction unit, and the other is a method that does not retrain the image feature extraction unit. In the case the image feature extraction unit is not retrained, it is relatively easy to maintain the accuracy in base classes, but there is a challenge in improving the accuracy in incremental classes. Further, if the number of incremental class images is small, it will be more difficult to improve the accuracy in the incremental class.

A purpose of the image classification apparatus 100 according to the embodiment of the present invention is to improve the accuracy of incremental class classification without retraining the image feature extraction unit in the case the number of incremental class images is small.

### (Exemplary embodiment)

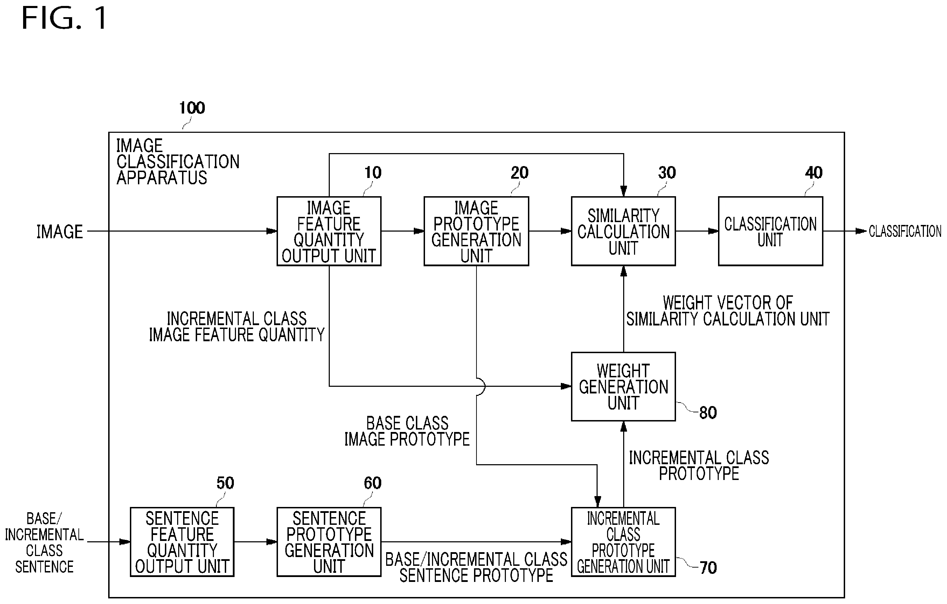

Fig. 1 shows a configuration of an image classification apparatus 100 according to the exemplary embodiment. The image classification apparatus 100 includes an image feature quantity output unit 10, an image prototype generation unit 20, a similarity calculation unit 30, a classification unit 40, a sentence feature quantity output unit 50, a sentence prototype generation unit 60, an incremental class prototype generation unit 70, and a weight generation unit 80.

The image feature quantity output unit 10 is a pre-trained neural network model trained on sentences and images, receives an image as an input, and outputs image feature quantity.

The image feature quantity output unit 10 is comprised of a deep neural network and calculates an image feature vector (image feature quantity) of the input image. The image feature quantity output unit 10 outputs the image feature vector to the image prototype generation unit 20 and the weight generation unit 80.

The weight parameter of the image feature quantity output unit 10 is assumed to pre-trained on a sufficient amount of image dataset such as ImageNet prior to the base class dataset. Further, the weight parameter of the image feature quantity output unit 10 is assumed to be fixed after fine-tuning using the base class dataset.

In this case, ResNet-18 is used as the image feature quantity output unit 10. The number of dimensions of the feature vector of ResNet-18 is 512. The image feature quantity output unit 10 is not limited to ResNet-18 but may be a deep neural network such as ViT-B/32 (the image feature quantity has 512 dimensions) or ViT-L/14 (the image feature quantity has 768 dimensions). The image feature quantity output unit 10 may also be RN50 (the image feature quantity has 1024 dimensions), RN101 (the image feature quantity has 512 dimensions), RN50x4 (the image feature quantity has 640), which are expanded models of ResNet.

The image prototype generation unit 20 outputs an image prototype of each class by calculating an image feature quantity for each class (e.g., finding an average, median, representative value, etc.).

The similarity calculation unit 30 is comprised of a fully-connected layer, which has weight vectors of multiple classes. In other words, the weight vector is available for each class.

The similarity calculation unit 30 calculates a cosine similarity, which is the similarity between the input image feature quantity and the weight vectors of multiple classes. The similarity calculation unit 30 outputs the cosine similarity of multiple classes to the classification unit 40.

The weight vector of the fully-connected layer is inclusive of the base class and the incremental class. The weight vector of each class is a representative vector of the image feature quantity of each class and is also called a prototype. The prototype is assumed to be an average of the image feature quantity.

The base class weight vector of the similarity calculation unit 30 is assumed to be pre-calculated on the base class dataset and fixed.

The image feature quantity output unit 10 receives all base class training images included in the basic training dataset as inputs and outputs the image feature quantity of all base class training images. The image prototype generation unit 20 receives the image feature quantity of all base class training images as inputs, averages the image feature quantity for each class, and outputs the weight vector (image prototype) of each base class.

The similarity calculation unit 30 receives the base class weight vector from the image prototype generation unit 20. Meanwhile, the incremental class weight vector of the similarity calculation unit 30 is input from the weight generation unit 80. The specific method for incrementation will be described later.

The similarity calculation unit 30 holds the image prototype of the base class output from the image prototype generation unit 20 as the weight of the base class, holds the incremental class prototype output from the weight generation unit 80 as the weight of the incremental class, and uses the image feature quantity output from the image feature quantity output unit 10 as the input to calculate the similarity.

The classification unit 40 selects a class with the greatest similarity by referring to the similarity calculated by the similarity calculation unit 30. Similarity is exemplified by cosine similarity, and cosine similarity indicates a degree of similarity for each class. The classification unit 40 selects a class with the greatest cosine similarity.

The sentence feature quantity output unit 50 is a pre-trained neural network model trained on sentences and images, receives a sentence describing a class as an input, and outputs a sentence feature quantity.

The sentence feature quantity output unit 50 is comprised of a deep neural network and calculates a sentence feature vector (sentence feature quantity) from the sentence about an input class name.

The sentence feature quantity output unit 50 outputs the sentence feature vector to the sentence prototype generation unit 60.

The sentence prototype generation unit 60 calculates a sentence feature quantity for each class (e.g., finding a mean, median, representative value, etc.) and outputs a sentence prototype of each class.

Given that there is only one sentence about a class, the sentence feature quantity will directly represent the sentence prototype, and so the sentence prototype generation unit 60 may be omitted. In that case, it should be noted that the sentence feature quantity output from the sentence feature quantity output unit 50 is directly input as the sentence prototype to the incremental class prototype generation unit 70.

The transformer model, which is a text encoder trained in a common joint image-text feature space as shown in non-patent literature 1, is used as the neural network model of the sentence feature quantity output unit 50. Therefore, it is possible to find a match between the sentence feature quantity output by the sentence feature quantity output unit 50 and the image feature quantity.

Non-patent literature 1 teaches training an image encoder and a text encoder to enable finding a match between an image feature vector and a sentence feature vector of a given class in a feature space.

It is known that a text encoder and an image encoder are not good at detailed classification into classes but are good at conceptual classification.

Generally, an image encoder is a very large neural network and is trained on a large-scale dataset. Meanwhile, a text encoder may not be a large-scale neural network like an image encoder.

Conceptual classification capabilities of a text encoder, which only requires a small implementation scale, is used for few-shot learning to improve the accuracy of classification into classes.

The number of dimensions of the feature vector output by the image feature quantity output unit 10 is assumed to be 512, which is equal to the number of dimensions of the feature vector output by the sentence feature quantity output unit 50. By configuring the number of dimensions to be equal, it is possible to find a match directly without reducing the number of dimensions so that the matching accuracy is improved.

The prototype calculated based on the feature vector output by the image feature quantity output unit 10 will be called "image prototype", and the prototype calculated based on the feature vector output by the sentence feature quantity output unit 50 will be called "sentence prototype".

The incremental class prototype generation unit 70 uses the base class image prototype and the base class sentence prototype to generate an incremental class prototype.

More specifically, the incremental class prototype generation unit 70 calculates a difference between the base class sentence prototype in the neighborhood of the incremental class sentence prototype and the image prototype of the same base class as that of the base class sentence prototype in the vicinity of the incremental class sentence prototype. Further, the incremental class prototype generation unit 70 generates the incremental class prototype by adding this difference to the incremental class sentence feature quantity. It will be noted that at least one neighbor need be identified. Therefore, this difference may be a difference from only one neighbor or an average of differences from several neighbors. The term "neighbor" can be translated into "within a predetermined distance".

The incremental class prototype generation unit 70 outputs the incremental class prototype to the weight generation unit 80.

The weight generation unit 80 receives the incremental class image feature quantity and the incremental class prototype as inputs and makes a calculation by using the incremental class image feature quantity and the incremental class prototype to generate the incremental class weight vector of the similarity calculation unit 30.

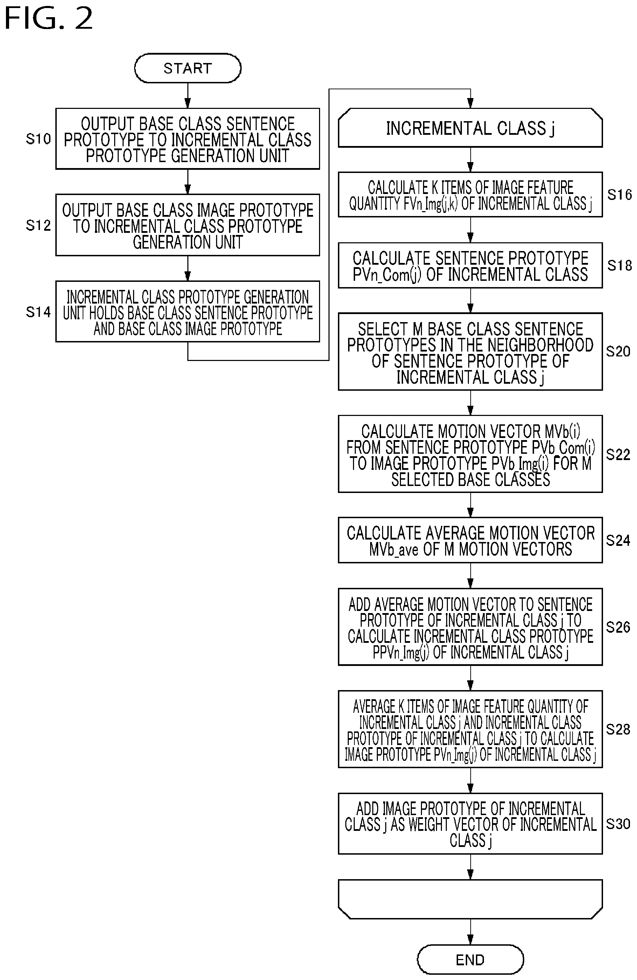

Fig. 2 is a flowchart showing steps of incremental learning by the image classification apparatus 100.

A sentence describing a base class is input to the sentence feature quantity output unit 50. When there is not any proper sentence to describe the base class, the class name of the base class may be used as a sentence. The sentence feature quantity output unit 50 calculates the base class sentence feature quantity from the input sentence, and the sentence prototype generation unit 60 generates the base class sentence prototype from the base class sentence feature quantity and outputs the base class sentence prototype to the incremental class prototype generation unit 70 (S10).

The image feature quantity output unit 10 receives a base class image as an input and outputs an image feature quantity. The image prototype generation unit 20 receives the image feature quantity as an input and outputs the base class image prototype (weight vector) to the incremental class prototype generation unit 70 (S12).

The incremental class prototype generation unit 70 holds the base class sentence prototype and the base class image prototype (weight vector) (S14).

A description will be given of steps of incremental learning to enable classification into incremental classes after incremental classes are given. Incremental learning does not require a large-scale process such as optimization, and so incremental learning can be repeated.

For simplification of the description, incremental classes are assumed to be added one by one, but multiple classes can be added at once.

A sentence describing an incremental class j and K and images are given as data for the incremental class, where K is an arbitrary integer, which is 1 or more. When there is no proper sentence to describe the incremental class, the class name of the incremental class may be used as a sentence. The sentence is input to the sentence feature quantity output unit 50, and the K images are input to the image feature quantity output unit 10.

When the K images are input, the image feature quantity output unit 10 calculates K items of image feature quantity FVn_Img(j,k) of the incremental class j and gives them to the weight generation unit 80 (S16), where k=0, 1, 2, ..., K-1.

When a sentence describing the incremental class is input, the sentence feature quantity output unit 50 calculates the sentence prototype PVn_Com(j) of the incremental class j and gives it to the incremental class prototype generation unit 70 (S18).

The incremental class prototype generation unit 70 selects M base class prototypes in the neighborhood of the sentence prototype of the incremental class j (e.g., M=3) (S20), where M is an arbitrary integer, which is 1 or greater.

The incremental class prototype generation unit 70 calculates a motion vector MVb(i) from the sentence prototype PVb_Com(i) to the image prototype PVb_Img(i) for the selected M base classes i, as given by the following expression (S22), where i=1, 2, ..., M. $MVb \left(i\right) = PVb_Img \left(i\right) - PVb_Com \left(i\right)$

The incremental class prototype generation unit 70 calculates a base class average motion vector MVb_ave of the motion vectors of the M base classes, as given by the following expression (S24). $MVb_ave = \sum MVb \left(i\right) / M$

The incremental class prototype generation unit 70 adds the base class average motion vector to the sentence prototype of the incremental class j to calculate the incremental class prototype PPVn_Img(j) of the incremental class j as given by the following expression, and gives it to the weight generation unit 80 (S26). $PPVn_Img \left(j\right) = PVn_Com \left(j\right) + MVb_ave$

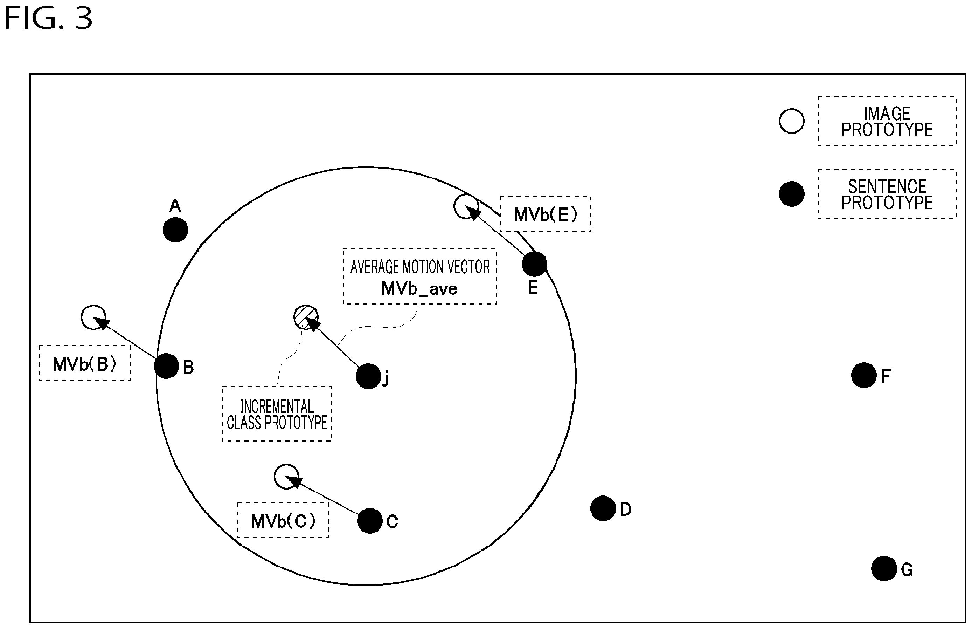

Fig. 3 shows an example of the calculation of an incremental class prototype.

First, the sentence prototypes (black circles) of the base classes B, C, and E in the neighborhood of the sentence prototype of the incremental class j are selected. MVb(B), MVb(C), and MVb(E), which are motion vectors from the sentence prototypes to the image prototypes of the base classes B, C, and E, are then calculated. MVb(B), MVb(C), and MVb(E) are averaged to calculate an average motion vector MVb_ave. The motion vector is added to the sentence prototype of the incremental class j to calculate the incremental class prototype of the incremental class j.

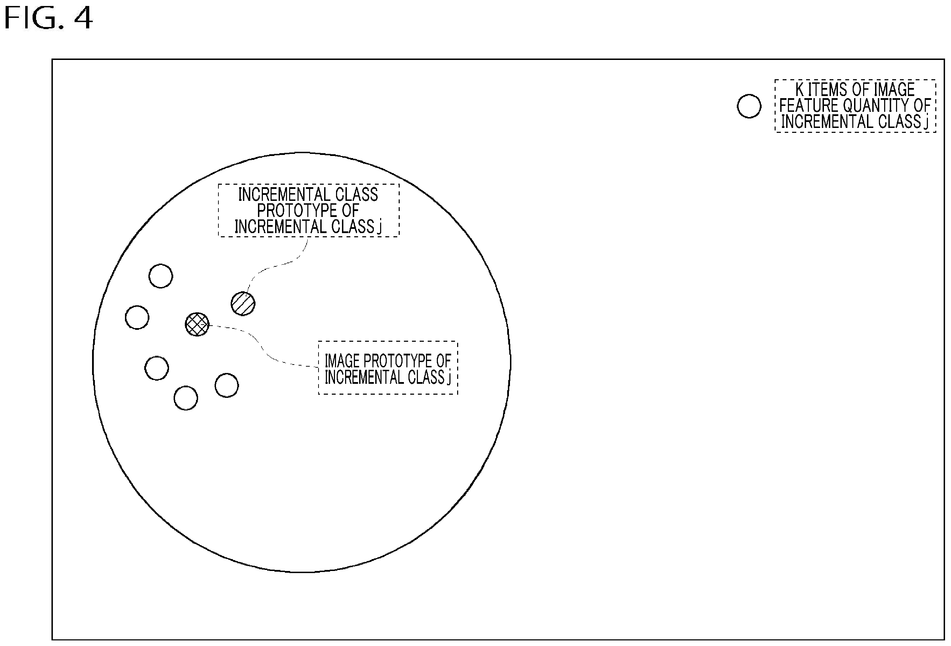

Fig. 4 shows an exemplary operation of the weight generation unit 80.

The weight generation unit 80 averages the K items of image feature quantity of the incremental class j input from the image feature quantity output unit 10 and the incremental class prototype of the incremental class j input from the incremental class prototype generation unit 70 to calculate the image prototype PVn_Img(j) of the incremental class j as given by the following expression and output the image prototype of the incremental class j to the similarity calculation unit 30 (S28). $PVn_Img \left(j\right) = \left(ΣFVn_Img\left(j, k\right)+PPVn_Img\left(j\right)\right) / \left(K+1\right)$

The similarity calculation unit 30 adds the image prototype of the incremental class j as the weight vector of the incremental class j to the fully-connected layer (S30).

This provides the image classification apparatus 100 with the capabilities for classification into the incremental class j in addition to the base class.

In another example, the proportion of the incremental class prototype (α in the following expression) may be increased to calculate the weight-averaged image prototype of the incremental class j as given by the following expression when it is known that the accuracy of the sentence prototype of the incremental class j output by the sentence feature quantity output unit 50 is high. α is set to be greater than 1. For example, α may be set to be 1.2. $PVn_Img \left(j\right) = ΣFVn_Img \left(j, k\right) / K + α \times PPVn_Img \left(j\right)$

In this case, the average of the motion vectors of the neighboring classes is used. Alternatively, for example, the statistics other than average (median, maximum, minimum, etc.) of the motion vectors of the neighboring classes may be used.

A description will now be given of steps of classification (inference) performed by the image classification apparatus 100 provided with the capabilities for incremental class classification.

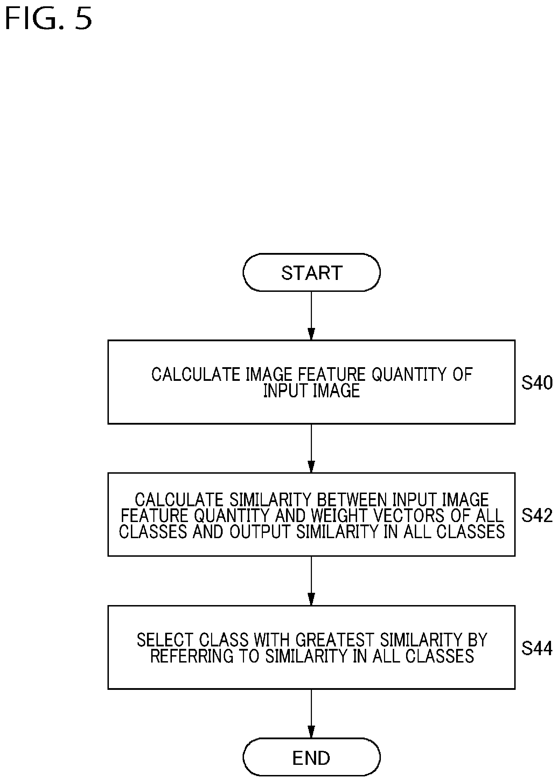

Fig. 5 is a flowchart showing steps of classification by the image classification apparatus 100.

An input image is input to the image feature quantity output unit 10. The image feature quantity output unit 10 calculates the image feature quantity of the input image and gives it to the similarity calculation unit 30 (S40).

The similarity calculation unit 30 calculates a similarity between the input image feature quantity and the weight vectors of all classes and gives the similarity in all classes to the classification unit 40 (S42).

The classification unit 40 selects a class with the greatest similarity by referring to the similarity in all classes. This determines the class of the input image.

As described above, the image classification apparatus 100 according to the exemplary embodiment calculates the incremental class prototype by using the incremental class sentence prototype and the average motion vector calculated from the base class sentence prototype and the base class image prototype. Further, the image classification apparatus 100 averages the incremental class prototype and the K items of incremental class image feature quantity to calculate, as the weight vector of the similarity calculation unit 30, the incremental class image prototype. This makes it possible to obtain, even if the image data is comprised of a small number of incremental classes, a highly accurate incremental class image prototype by using a base class image prototype having high accuracy because of its calculation from a large number of images. Further, the image classification apparatus 100 is capable of highly accurate classification into incremental classes as well as base classes by weight-averaging the incremental class image prototype depending on the accuracy of the incremental class sentence prototype output by the sentence prototype generation unit 60.

In the above exemplary embodiment, the incremental class prototype generation unit 70 selects, as the sentence prototype in the neighborhood of the sentence prototype of the incremental class j, the sentence prototype of the base class learned with a sufficient amount of data. Alternatively, the sentence prototype of the incremental class input before the incremental class j may be selected as the sentence prototype in the neighborhood.

### (Variation 1)

A description will be given of a simplified configuration of the image classification apparatus 100 of the exemplary embodiment. Specifically, a description will be given of a variation in which the incremental class includes only a class name (label) and no image data.

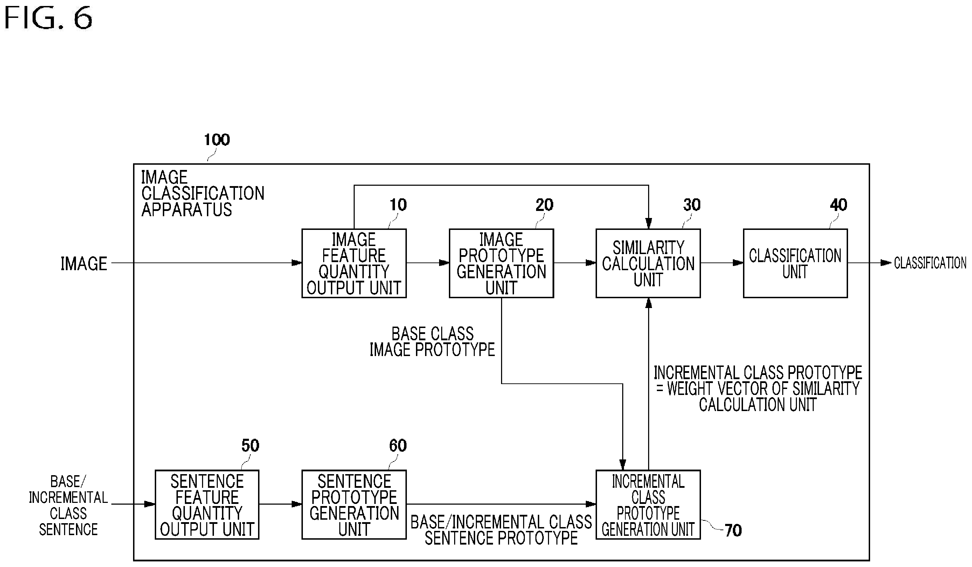

Fig. 6 shows the image classification apparatus 100 of variation 1. The difference from the exemplary embodiment is that the weight generation unit 80 is not provided, and no processing flows related to the weight generation unit 80 is provided. In this way, the incremental class can be learned by using the class name of the incremental class as the sentence data even if there is no image data for the incremental class.

When the feature space of the sentence feature quantity output unit 50 and the feature space of the image feature quantity output unit 10 are learned such that they are close to each other, the incremental class can be trained even if there is no image data for the incremental class by using the sentence prototype generated from the class name of the incremental class.

For example, the feature space of the sentence feature quantity output unit 50 and the feature space of the image feature quantity output unit 10 are close when they have the same number of dimensions. When the sentence feature quantity output by the sentence feature quantity output unit 50 and the image feature quantity output by the image feature quantity output unit 10 in a given class are mapped to the same feature space, the distance between the sentence feature quantity and the image feature quantity will be small.

Even if the incremental class includes only a class name and includes no images, the image classification apparatus 100 is capable of classification into the incremental class j as well as the base class by using the incremental class prototype.

In variation 1, the weight generation unit 80 is not provided. The incremental class prototype generation unit 70 outputs the incremental class prototype of the incremental class j as the weight vector of the incremental class j to the similarity calculation unit 30. As mentioned above, the sentence feature quantity and the image feature quantity have the same number of dimensions, and the sentence feature quantity and the image feature quantity in a given class, when mapped to the same feature space, are at a close distance. Therefore, the sentence prototype and the image prototype of the incremental class j generated from the sentence feature quantity and the image feature quantity, respectively, will have the same relationship. Therefore, the incremental class prototype generation unit 70 can generate the incremental class prototype by using the sentence prototype of the incremental class j and the base class image prototype.

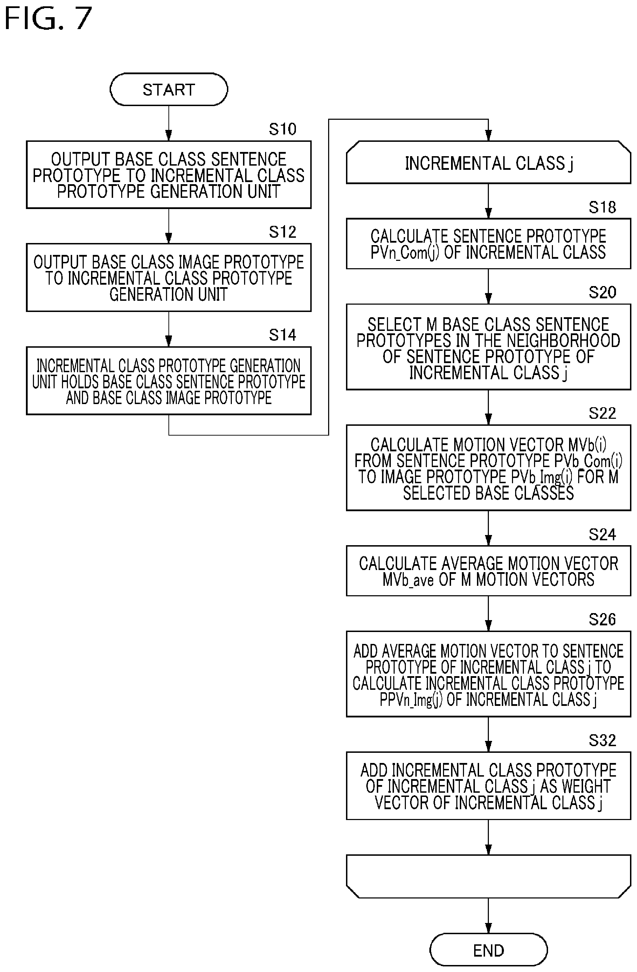

Fig. 7 is a flowchart showing steps of incremental learning by the image classification apparatus 100 of variation 1. The difference is that steps S16 and S28 in Fig. 2 are omitted, and step S30 is replaced with step S32. Since the other steps are the same as those shown in Fig. 2, a description of common steps will be omitted, and only the difference will be described.

In step S32, the similarity calculation unit 30 adds the incremental class prototype of the incremental class j as the weight vector of the incremental class j to the fully-connected layer.

### (Variation 2)

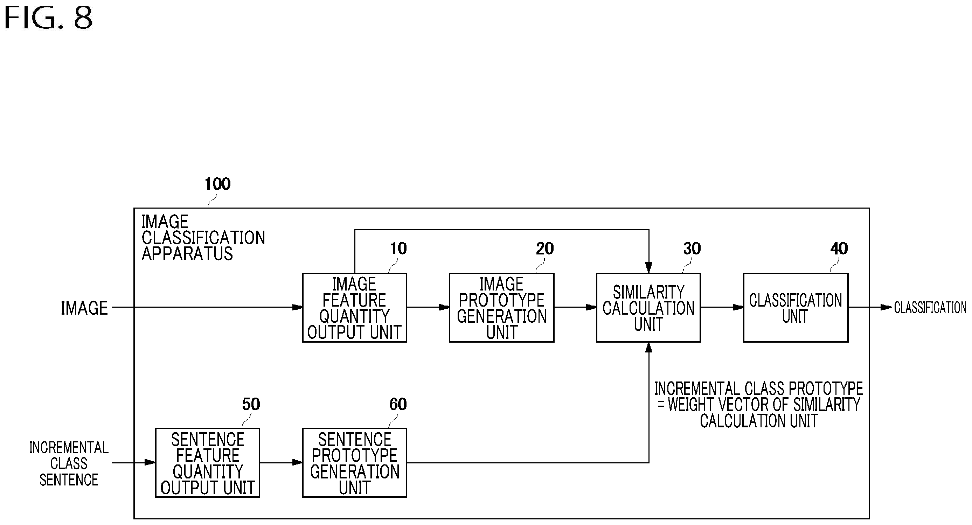

A description will be given of a more simplified configuration of variation 1. Fig. 8 shows a configuration of the image classification apparatus 100 of variation 2. The difference from variation 1 is that the incremental class prototype generation unit 70 is not provided. This allows the sentence prototype output from the sentence prototype generation unit 60 (the sentence feature quantity output from the sentence feature quantity output unit 50 in the case there is only one sentence about the class (e.g., only a class name)) to be used as the weight vector of the similarity calculation unit 30.

Variation 2 is applicable when the feature space of the sentence feature quantity output unit 50 and the feature space of the image feature quantity output unit 10 are learned such that they are close to each other. The sentence prototype output from the sentence prototype generation unit 60 can be directly used as the weight vector of the similarity calculation unit 30 so that the configuration can be simplified, and the processing load on the image classification apparatus 100 can be reduced.

Further, incremental learning can be performed only with the class name of the incremental class even if there is no image data for the incremental class. In addition, it eliminates the need to consider a portion in the image not related to the class name such as the background and so can improve the accuracy of the weight vector.

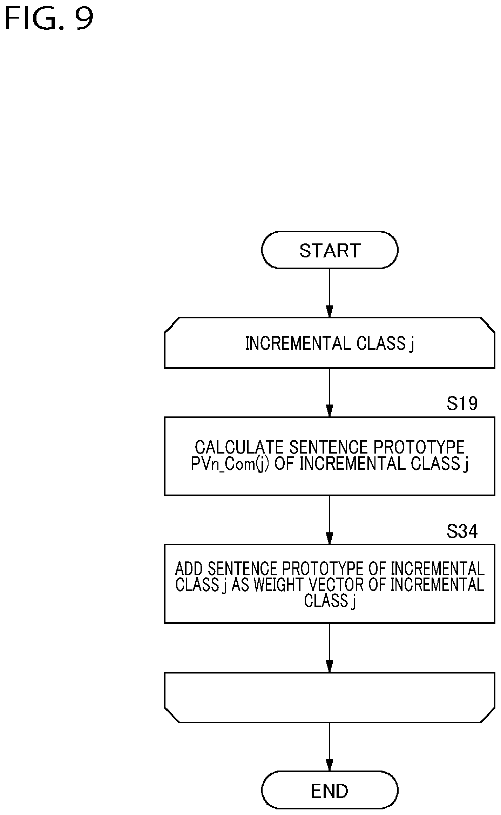

Fig. 9 is a flowchart showing steps of incremental learning by the image classification apparatus 100 of variation 2. Steps S10, S12, S14, S16, S20, S22, S24, S26, and S28 of the steps of incremental learning of the exemplary embodiment of Fig. 2 are omitted, step S18 is replaced with step S19, and step S30 is replaced with step S34.

When a sentence of an incremental class is input, the sentence feature quantity output unit 50 outputs the sentence feature quantity to the sentence prototype generation unit 60. The sentence prototype generation unit 60 calculates the sentence prototype PVn_Com(j) of the incremental class j from the sentence feature quantity and gives it to the similarity calculation unit 30 (S19).

The similarity calculation unit 30 adds the sentence prototype of the incremental class j as the weight vector of the incremental class j to the fully-connected layer (S34).

### (Variation 3)

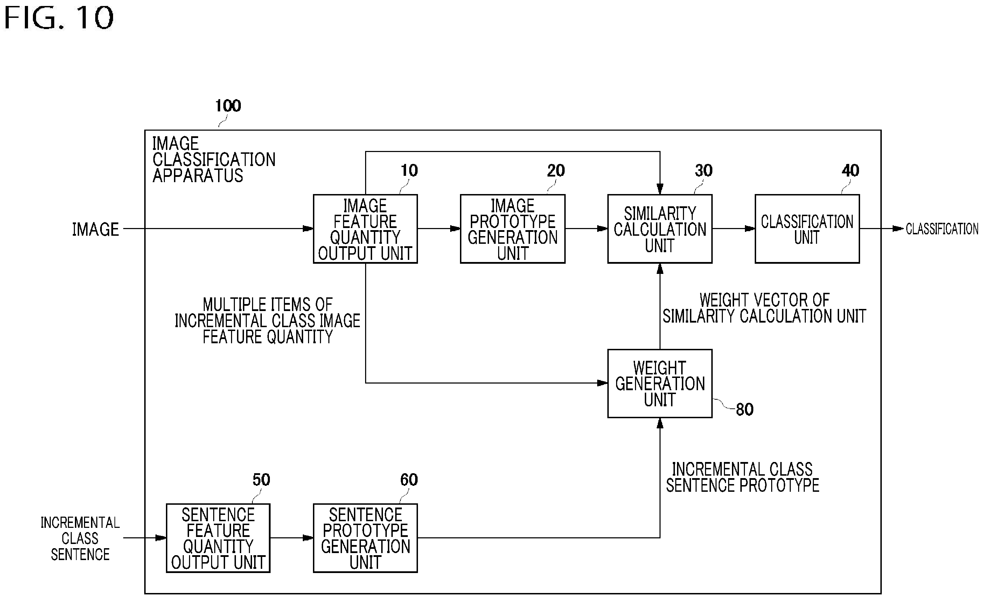

A description will be given of a simplified configuration of the exemplary embodiment. Fig. 10 shows the image classification apparatus 100 of variation 3. The difference from the exemplary embodiment of Fig. 1 is that the incremental class prototype generation unit 70 is not provided.

The weight generation unit 80 averages the sentence prototype output from the sentence prototype generation unit 60 (the sentence feature quantity output from the sentence feature quantity output unit 50 in the case there is only one sentence about the class (e.g., only a class name) and the image feature quantity output from the image feature quantity output unit 10 to generate the weight vector for similarity calculation unit 30.

The feature space of the sentence feature quantity output unit 50 and the feature space of the image feature quantity output unit 10 are learned such that they are close to each other. When there is mage data for an incremental class, the weight generation unit 80 can generate a proper incremental class weight vector of the similarity calculation unit 30 by using the sentence prototype of the class j output by using a sentence, which is highly accurate but generic information, and the image feature quantity of the incremental class j output by using an image, which is specific information.

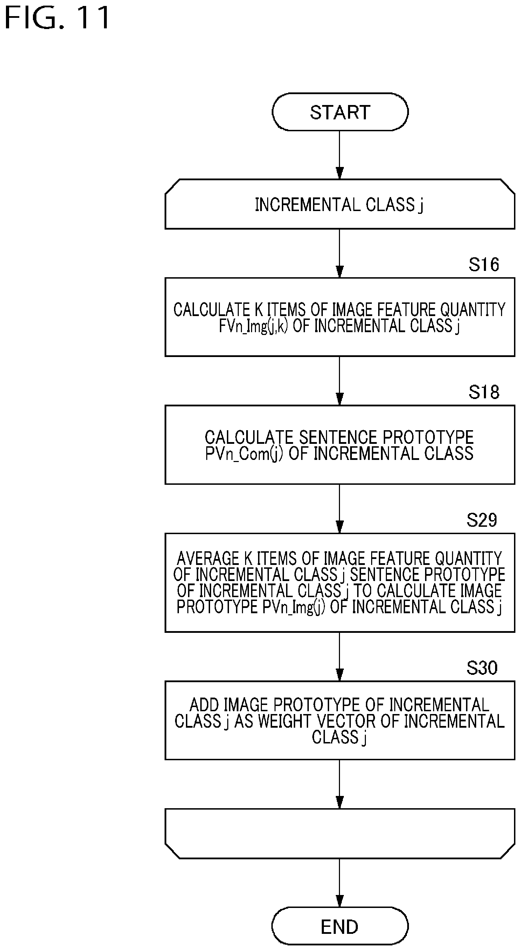

Fig. 11 is a flowchart showing steps of incremental learning by the image classification apparatus 100 of variation 3. The difference is that steps S10, S12, S14, S20, S22, S24, and S26 of the steps of incremental learning of the exemplary embodiment of Fig. 2 are omitted, and step S28 is replaced with step S29. Since the other steps are the same as those shown in Fig. 2, a description of common steps will be omitted, and only the difference will be described.

In step S29, the weight generation unit 80 averages K items of image feature quantity of the incremental class j input from the image feature quantity output unit 10 and the sentence prototype input from the sentence prototype generation unit 60 (the sentence feature quantity output from the sentence feature quantity output unit 50 in the case there is only one sentence about the class) to calculate the image prototype PVn_Img(j) of the incremental class j and output the image prototype of the incremental class j to the similarity calculation unit 30.

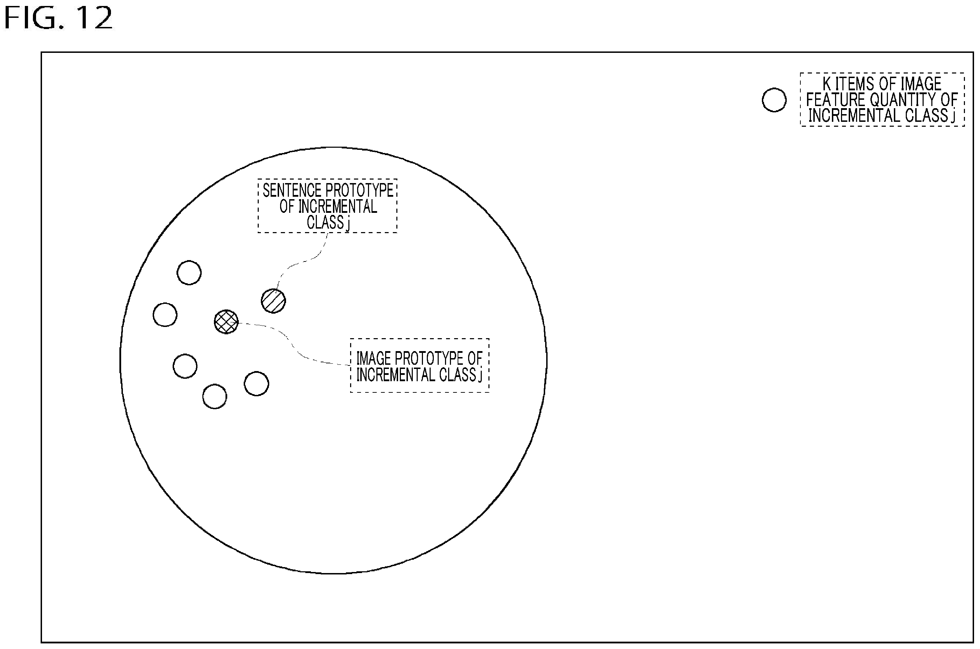

Fig. 12 shows an exemplary operation of the weight generation unit 80 of variation 3.

The weight generation unit 80 averages the K items image feature quantity FVn_Img PVn_Img(j) of the incremental class j input from the image feature quantity output unit 10 and the sentence prototype PVn_Com(j) of the incremental class j input from the sentence prototype generation unit 60 to calculate the image prototype PVn_Img(j) of the incremental class j as given by the following expression. $PVn_Img \left(j\right) = \left(ΣFVn_Img\left(j, k\right)+PVn_Com\left(j\right)\right) / \left(K+1\right)$

### (Variation 4)

A description will be given of a variation of the incremental class prototype generation unit 70. It is assumed that a super class higher than a given class is defined for the dataset used in the base class training.

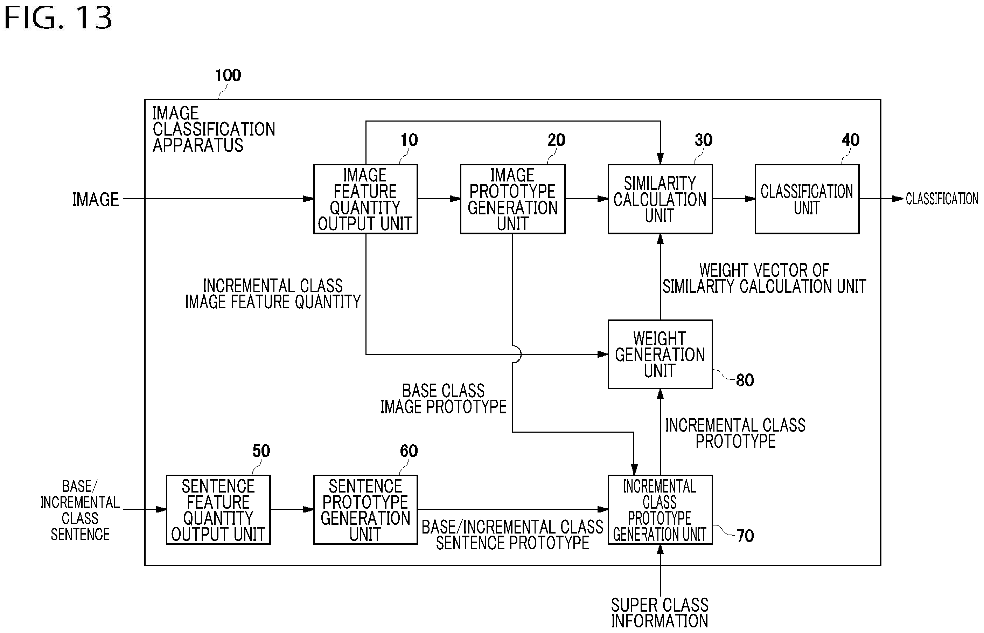

Fig. 13 shows the image classification apparatus 100 of variation 4. The difference from the exemplary embodiment is that super class information is given to the incremental class prototype generation unit 70. In the exemplary embodiment, the base class sentence prototype in the neighborhood of the incremental class sentence prototype is used to calculate the incremental class prototype. In variation 4, a super class is predefined, and the sentence prototype of base class that belongs to the same super class as the incremental class is used to calculate the incremental class prototype.

When images of different classes with the same super class are compared, similar characteristics are revealed. When there is a large deviation between the image prototype and the sentence prototype, therefore, the accuracy can be improved by calculating the incremental class prototype by using the image prototype of another class with the same super class rather than by using the correlation based on sentence prototype.

The weight generation unit 80 may be omitted by applying variation 1 to variation 4.

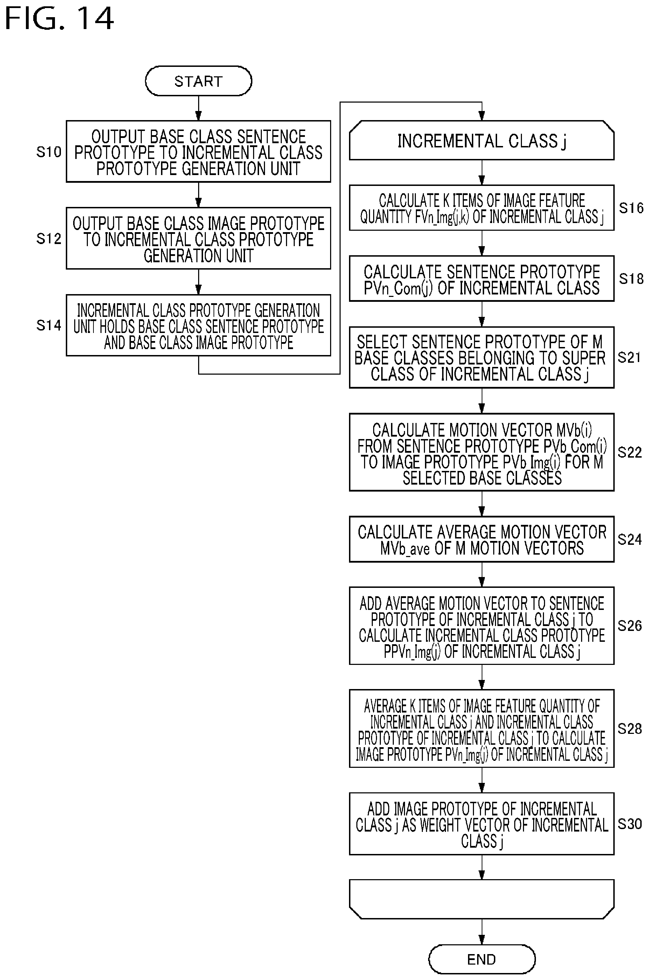

Fig. 14 is a flowchart showing steps of incremental learning by the image classification apparatus 100 of variation 4. The difference is that step S20 of the steps of incremental learning of the exemplary embodiment of Fig. 2 is replaced with step S21. Otherwise, the steps are the same as those of Fig. 2 so that a description of common steps will be omitted, and only the difference will be described.

In step S21, the incremental class prototype generation unit 70 selects the sentence prototype of M base classes belonging to the super class of the incremental class j.

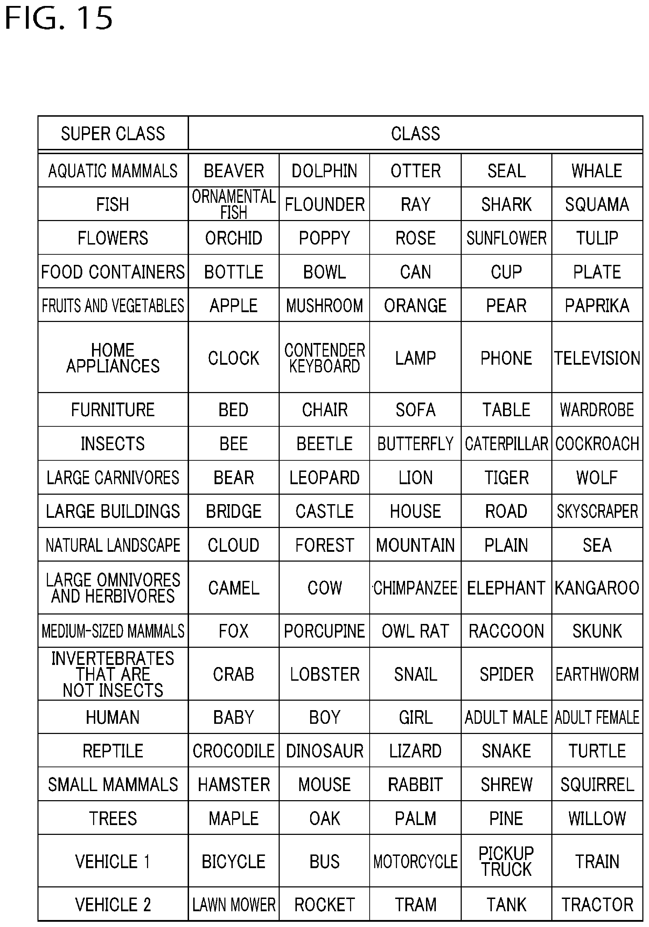

Fig. 15 shows examples of super classes. A superclass is a concept generic to a class. Fig. 15 is an example of CIFAR100 dataset. Given that the super class is aquatic mammals and the incremental class is dolphins, for example, the base classes with the same superclass are beavers, otters, seals, and whales. For example, aquatic mammals when imaged have similar characteristics such as tail fins.

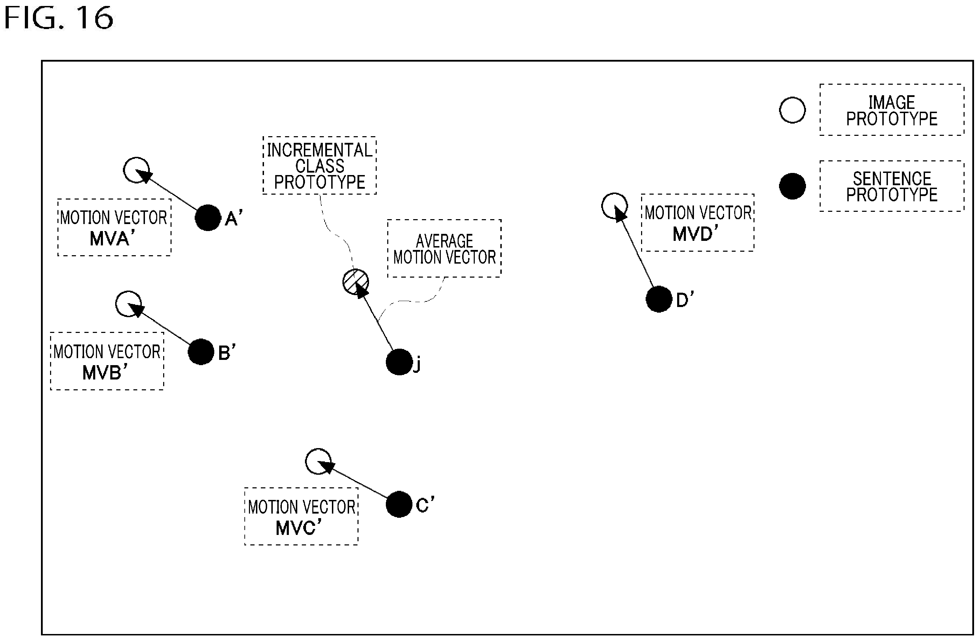

Fig. 16 shows calculation of an incremental class prototype by the incremental class prototype generation unit 70.

The base classes with the same superclass as the incremental class j are assumed to be class A', class B', class B', class C', and class D'. The motion vectors from the sentence prototypes to the image prototypes are respectively assumed to be MVA', MVB', MVC', and MVD in the order of the base classes above. The incremental class prototype generation unit 70 calculates the prototype of the incremental class j by adding an average motion vector, which is an average of MVA', MVB', MVC', and 'MVD', to the sentence prototype of the incremental class j.

When, for example, the incremental class j is beavers, and dolphins, otters, seals, and whales, which are included in the superclass "aquatic mammals", are included in the base classes, the prototypes of dolphins, otters, seals, and whales are A', B', C', and D', respectively.

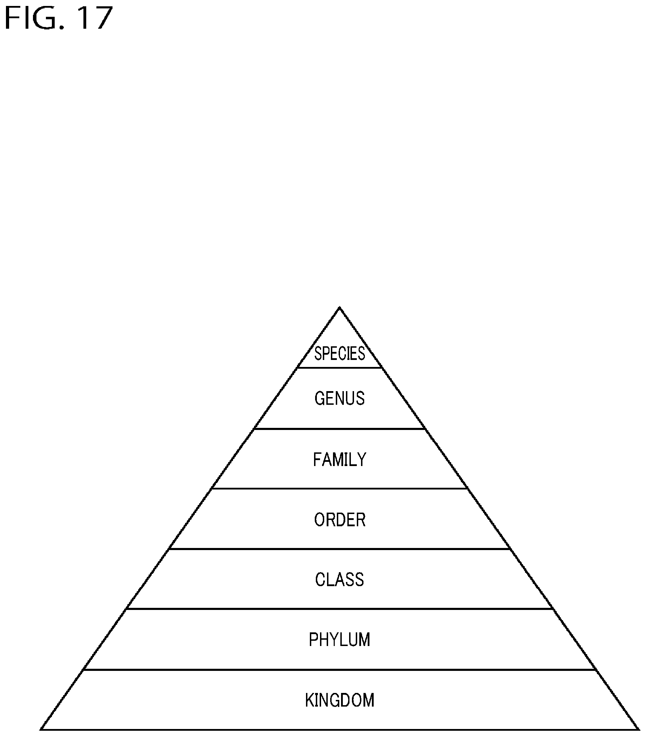

In another example related to a superclass, a superclass may be defined by using generally defined taxonomic classes of organisms, such as orders, families, genera, and species, as shown in Fig. 17.

In the case that classes having the same upper class are used, it is expected that the lower the taxonomic level of the superclass, the closer the prototypes.

In this example, the average of the motion vectors of classes with the same superclass are used. Alternatively, for example, the median, maximum, or minimum value of the motion vectors may be used.

### (Variation 5)

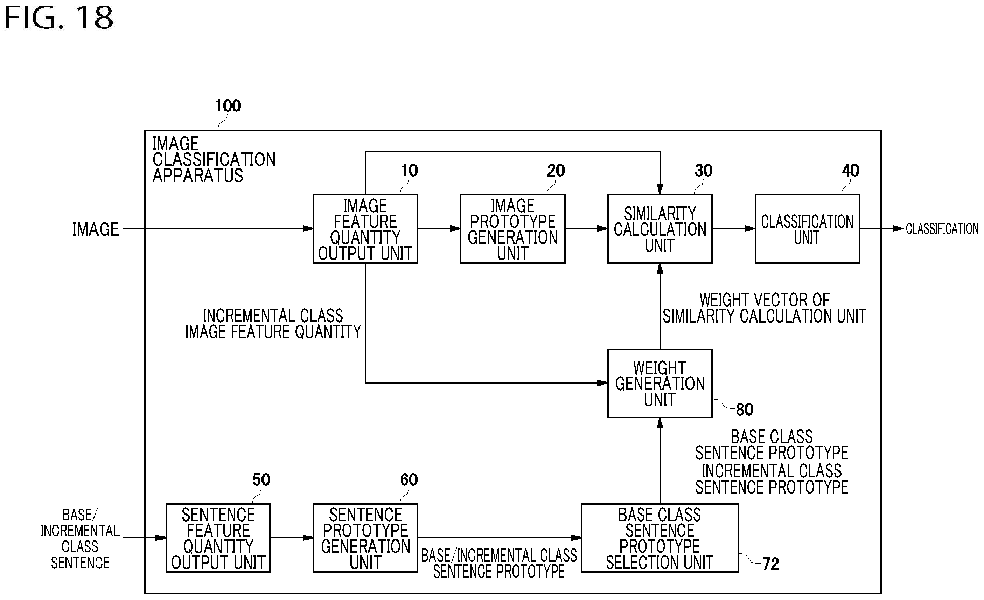

Fig. 18 shows a configuration of the image classification apparatus 100 of variation 5. The configuration of variation 5 differs from the exemplary embodiment in that the incremental class prototype generation unit 70 is replaced with a base class sentence prototype selection unit 72 and differs in respect of the operation of the weight generation unit 80.

The base class sentence prototype selection unit 72 selects the base class sentence prototype in the neighborhood of the incremental class sentence prototype and gives the base class sentence prototype and the incremental class sentence prototype to the weight generation unit 80.

The weight generation unit 80 averages K items of incremental class image feature quantity input from the image feature quantity output unit 10, L base class sentence prototypes input from the base class sentence prototype selection unit 72, and one incremental class sentence prototype input from the base class sentence prototype selection unit 72 to calculate the incremental class image prototype. The weight generation unit 80 defines the incremental class image prototype thus calculated as the incremental class weight vector of the similarity calculation unit 30. In this case, L denotes an arbitrary integer, which is 1 or greater.

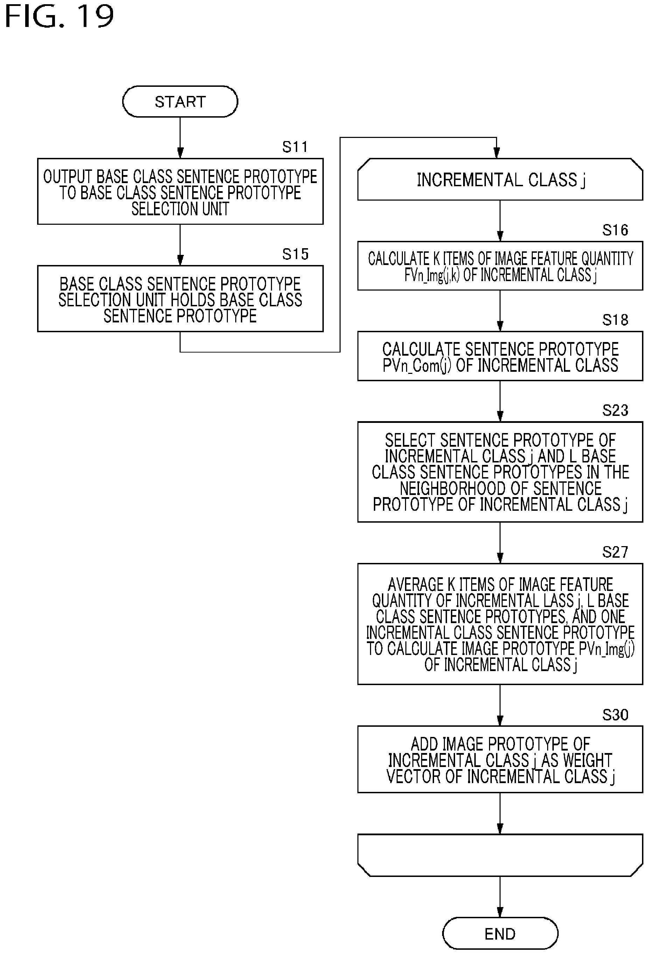

Fig. 19 is a flowchart showing steps of incremental learning by the image classification apparatus 100 of variation 5. In variation 5, the steps S10, S12, and S14 of the steps of the exemplary embodiment of Fig. 2 are replaced with steps S11 and S15 of Fig. 19, and the steps S20, S22, S24, S26, and S28 of Fig. 2 are replaced with steps S23 and S27 of Fig. 19. Since the other steps are the same as those shown in Fig. 2, a description of common steps will be omitted, and only the difference will be described.

In step S11, the sentence prototype generation unit 60 outputs the base class sentence prototype to the base class sentence prototype selection unit 72.

In step S15, the incremental class prototype generation unit 70 holds the base class sentence prototype.

In step S23, the base class sentence prototype selection unit 72 selects the sentence prototype of the incremental class j and the L base class sentence prototypes in the neighborhood of the sentence prototype of the incremental class j.

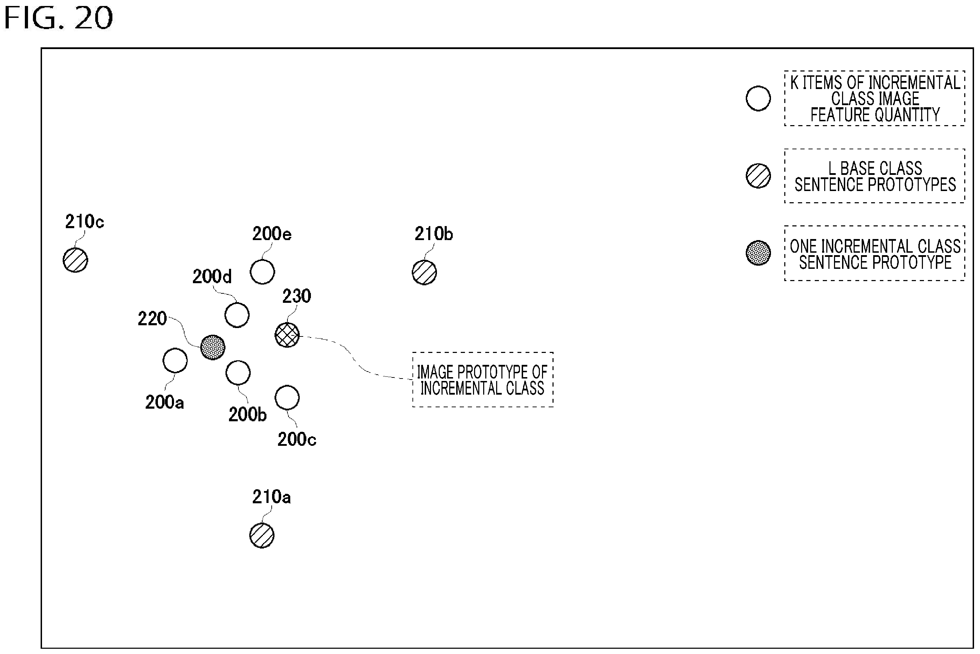

In step S27, the weight generation unit 80 averages K items of image feature quantity of the incremental class j input from the image feature quantity output unit 10, L base class sentence prototypes input from the base class sentence prototype selection unit 72, and one incremental class sentence prototype to calculate the image prototype PVn_Img(j) of the incremental class j. The weight generation unit 80 outputs PVn_Img(j) as the weight vector of the incremental class j to the similarity calculation unit 30. Fig. 20 shows an exemplary operation of the weight generation unit 80 of variation 5. By way of example, reference signs 200a, 200b, 200c, 200d, and 200e denote five items of image feature quantity of the incremental class j, reference signs 210a, 210b, and 210c denote three base class sentence prototypes, and reference sign 220 denotes one incremental class sentence prototype. Reference sign 230 denotes the image prototype of the incremental class j calculated by averaging the five items of image feature quantity of the incremental class j, the three base class sentence prototypes, and the one incremental class sentence prototype.

It is known that the image prototype calculated by using the image feature quantity of a small number of images of a given class has insufficient ability to adapt to unknown image data (generalization performance). This is addressed by improving he generalization performance by using the sentence prototype of the incremental class j and the base class sentence prototype in the neighborhood.

### (Variation 6)

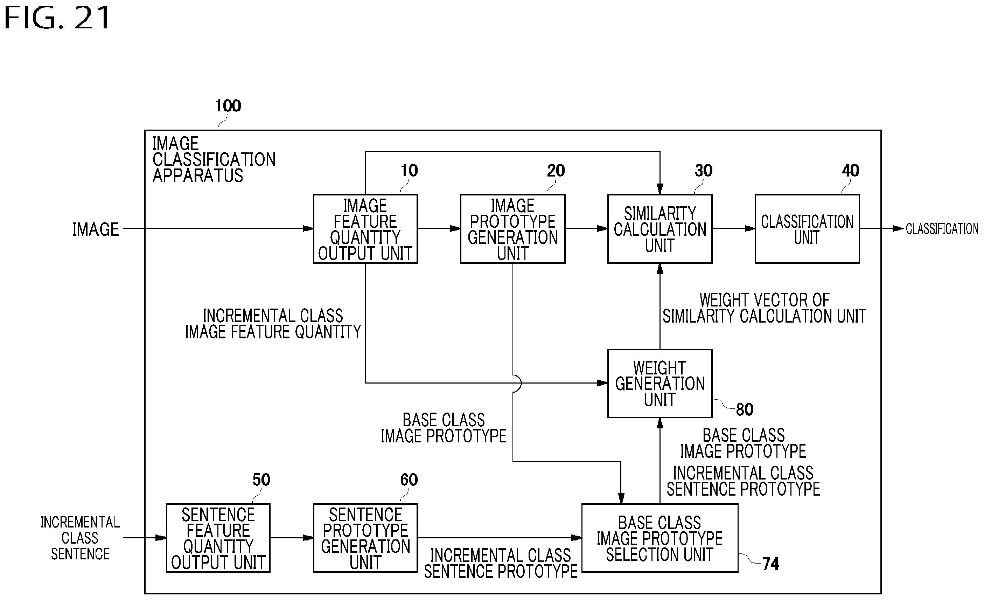

Fig. 21 shows a configuration of the image classification apparatus 100 of variation 6. The configuration of variation 6 differs in that the base class sentence prototype selection unit 72 of variation 5 is replaced with a base class image prototype selection unit 74 and differs in respect of the operation of the weight generation unit 80.

The base class image prototype selection unit 74 selects L base class image prototypes in the neighborhood of the crest incremental class prototype, and gives the selected base class image prototype and the incremental class sentence prototype to the weight generation unit 80.

The weight generation unit 80 averages K items of incremental class image feature quantity input from the image feature quantity output unit 10, L base class image prototypes input from the base class image prototype selection unit 74, and one incremental class sentence prototype input from the base class image prototype selection unit 74 to calculate the incremental class image prototype. The weight generation unit 80 defines the incremental class image prototype thus calculated as the incremental class weight vector of the similarity calculation unit 30.

In variation 6, step S23 of Fig. 19 is replaced as follows. The base class image prototype selection unit 74 selects the sentence prototype of the incremental class j and L base class image prototypes in the neighborhood of the sentence prototype of the incremental class j.

In variation 6, step S27 of Fig. 19 is replaced as follows. The weight generation unit 80 averages K items of image feature quantity of the incremental class j input from the image feature quantity output unit 10, L base class image prototypes input from the base class image prototype selection unit 74, and one incremental class sentence prototype to calculate the image prototype PVn_Img(j) of the incremental class j.

It is known that the image prototype calculated by using a small image feature quantity has insufficient generalization performance. This is addressed by improving the generalization performance by using the base class image prototype in the neighborhood of the incremental class j.

### (Variation 7)

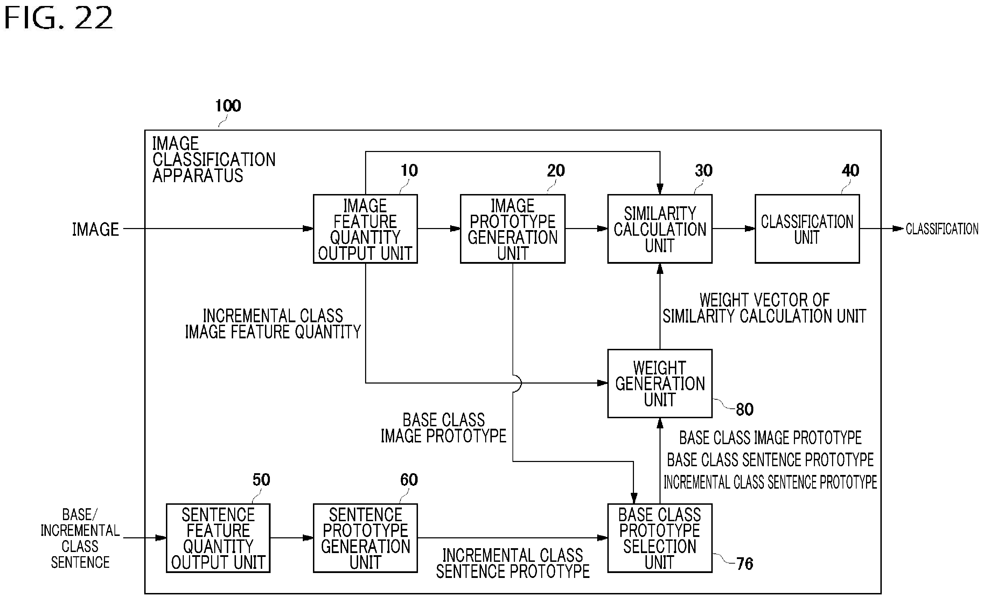

Fig. 22 shows a configuration of the image classification apparatus 100 of variation 7. The configuration of variation 7 differs in that the base class sentence prototype selection unit 72 of variation 5 and the base class image prototype selection unit 74 of variation 6 are replaced with a base class prototype selection unit 76 and differs in respect of the operation of the weight generation unit 80.

The base class prototype selection unit 76 selects the base class sentence prototype and the base class image prototype in the neighborhood of the incremental class sentence prototype and gives the base class sentence prototype, the base class image prototype, and the incremental class sentence prototype to the weight generation unit 80.

The weight generation unit 80 averages K items of incremental class image feature quantity input from the image feature quantity output unit 10, L base class sentence prototypes selected by the base class prototype selection unit 76, M base class image prototypes, and one incremental class sentence prototype input from the base class prototype selection unit 76 to calculate the incremental class image prototype. The weight generation unit 80 defines the incremental class image prototype as the incremental class weight vector of the similarity calculation unit 30.

In variation 7, step S23 of Fig. 19 is replaced as follows. The base class prototype selection unit 76 selects the sentence prototype of the incremental class j, L base class sentence prototypes in the neighborhood of the sentence prototype of the incremental class j, and M base class image prototypes in the neighborhood of the sentence prototype of the incremental class j.

In variation 7, step S27 of Fig. 19 is replaced as follows. The weight generation unit 80 averages K items of incremental class image feature quantity input from the image feature quantity output unit 10, one incremental class sentence prototype input from the base class prototype selection unit 76, L base class sentence prototypes selected by the base class prototype selection unit 76, and M base class image prototypes selected by the base class prototype selection unit 76 to calculate the image prototype PVn_Img(j) of the incremental class j.

It is known that the image prototype calculated by using the image feature quantity of a small number of images has insufficient generalization performance. This addressed by improving the generalization performance by using the base class image prototype in the neighborhood of the sentence prototype of the incremental class j.

The above-described various processes in the image classification apparatus 100 can of course be implemented by hardware-based apparatuses such as a CPU and a memory and can also be implemented by firmware stored in a ROM (read-only memory), a flash memory, etc., or by software on a computer, etc. The firmware program or the software program may be made available on, for example, a computer readable recording medium. Alternatively, the program may be transmitted and received to and from a server via a wired or wireless network. Still alternatively, the program may be transmitted and received in the form of data broadcast over terrestrial or satellite digital broadcast systems.

Described above is an explanation based on an exemplary embodiment. The embodiment is intended to be illustrative only and it will be understood by those skilled in the art that various modifications to combinations of constituting elements and processes are possible and that such modifications are also within the scope of the present invention.

### INDUSTRIAL APPLICABILITY

The present invention can be applied to image classification technology.

### REFERENCE SIGNS LIST

10 image feature quantity output unit, 20 image prototype generation unit, 30 similarity calculation unit, 40 classification unit, 50 sentence feature quantity output unit, 60 sentence prototype generation unit, 70 incremental class prototype generation unit, 72 base class sentence prototype selection unit, 74 base class image prototype selection unit, 76 base class prototype selection unit, 80 weight generation unit, 100 image classification apparatus

## Claims

1. An image classification apparatus comprising:
an image feature quantity output unit that is pre-trained on a sentence and an image, receives an image as an input, and outputs an image feature quantity;
an image prototype generation unit that calculates the image feature quantity for each class and outputs an image prototype of each class;
a sentence feature quantity output unit that is pre-trained on a sentence and an image, receives a sentence describing a class as an input, and outputs a sentence feature quantity;
a similarity calculation unit that holds, as a weight of a base class, the image prototype of the base class, holds, as a weight of an incremental class, the sentence feature quantity of the incremental class, receives the image feature quantity output from the image feature quantity output unit as an input, and calculates a similarity; and
a classification unit that receives the similarity as an input and determines a class of the image.

2. The image classification apparatus according to claim 1, further comprising:
a weight generation unit that uses the image feature quantity of the incremental class output from the image feature quantity output unit and the sentence feature quantity of the incremental class output from the sentence feature quantity output unit to generate the weight of the incremental class in the similarity calculation unit.

3. The image classification apparatus according to claim 1, further comprising:
an incremental class prototype generation unit that uses a difference between the sentence prototype of the base class in the neighborhood of the sentence feature quantity of the incremental class and the image prototype corresponding to the sentence prototype of the base class in the neighborhood of the sentence feature quantity of the incremental class, adds the difference to the sentence feature quantity of the incremental class to generate an incremental class prototype,
wherein the similarity calculation unit holds, as the weight of the base class, the image prototype of the base class output from the image prototype generation unit and holds, as the weight of the incremental class, the incremental class prototype, receives the image feature quantity output from the image feature quantity output unit as an input, and calculates a similarity.

4. The image classification apparatus according to claim 3, further comprising:
a weight generation unit that uses the image feature quantity of the incremental class and the incremental class prototype as inputs, makes a calculation by using the image feature quantity of the incremental class and the incremental class prototype, and generates the weight of the incremental class in the similarity calculation unit.

5. The image classification apparatus according to claim 4,
wherein the incremental class prototype generation unit uses a difference between the sentence prototype of a base class belonging to the same superclass as the class of the sentence feature quantity of the incremental class and the image prototype corresponding to the sentence prototype of the base class belonging to the same superclass as the class of the sentence feature quantity of the incremental class, adds the difference to the sentence feature quantity of the incremental class, and generates the incremental class prototype.

6. An image classification method comprising:
being pre-trained on a sentence and an image, receiving an image as an input, and outputting an image feature quantity;
calculating the image feature quantity for each class and outputting an image prototype of each class;
being pre-trained on a sentence and an image, receiving a sentence describing a class as an input, and outputting a sentence feature quantity;
holding, as a weight of a base class, the image prototype of the base class, holding, as a weight of an incremental class, the sentence feature quantity of the incremental class, receiving the image feature quantity output from the outputting of an image feature quantity as an input, and calculating a similarity; and
receiving the similarity as an input and determining a class of the image.

7. An image classification program comprising computer-implemented module including:
a module that is pre-trained on a sentence and an image, receives an image as an input, and outputs an image feature quantity;
a module that calculates the image feature quantity for each class and outputs an image prototype of each class;
a module that is pre-trained on a sentence and an image, receives a sentence describing a class as an input, and outputs a sentence feature quantity;
a module that holds, as a weight of a base class, the image prototype of the base class, holds, as a weight of an incremental class, the sentence feature quantity of the incremental class, receives the image feature quantity output from the module that outputs of an image feature quantity as an input, and calculates a similarity; and
a module that receives the similarity as an input and determines a class of the image.
